# EUROPÄISCHE PATENTANMELDUNG

(11) **EP 2 256 363 A2**
(43) Veröffentlichungstag der Anmeldung: **01.12.2010**
(21) Anmeldenummer: 10162392.4
(22) Anmeldetag: 10.05.2010
(51) Int. Cl.: F16F 9/32

(54) **Verfahren zur Herstellung eines Zylinders für einen Schwingungsdämpfer**

(30) Priorität: 28.05.2009 DE 102009026523
(71) Anmelder: ZF Friedrichshafen AG, 88038 Friedrichshafen (DE)
(72) Erfinder: Stretz, Klaus, 97437, Haßfurt (DE); Breun, Wolfgang, 97464, Niederwerrn (DE); Hegmann, Michael, 97453, Schonungen (DE); Rölleke, Hartmut, 57635, Kircheib (DE)

(57) **Zusammenfassung**

Verfahren zur Herstellung eines äußeren Zylinders (1) für einen Schwingungsdämpfer, wobei der Zylinder endseitig von einem Boden (13) verschlossen, der durch eine axiale rotationsfreie Stauchbewegung eines Umformwerkzeugs (5,7) aus einem Randbereich (11) des Zylinders erzeugt wird, wobei die Bodenkontur mittels eines Prägearbeitsschritts kalibriert wird und auf dem Boden ein Bodenventil montiert wird, und der Boden für einen Bodenventilkörper (23) axiale Stützflächen (21) aufweist, die durch beidseitig am Boden angreifende Umformwerkzeuge erzeugt werden.

## Beschreibung

Die Erfindung betrifft ein Verfahren zur Herstellung eines Zylinders für einen Schwingungsdämpfer gemäß dem Oberbegriff von Patentanspruch 1.

Ein Schwingungsdämpfer umfasst einen äußeren Zylinder, an dessen einen Ende ein Boden ausgeführt ist. Häufig wird der Boden als separates Bauteil hergestellt und mit dem Zylinder verschweißt. Beispielhaft wird auf die DE 25 16 656 C3 verwiesen. Der Boden weist eine kugelförmige Oberfläche auf, auf der z. B. ein Gelenkauge geschweißt wird. Ein im Zylinder angeordnetes Bodenventil verfügt über segmentartige Stützflächen, über die sich das Bodenventil am Boden abstützt. Dämpfmedium aus einem Ausgleichsraum kann zwischen den Stützflächen hindurch strömen. Ein generelles Problem besteht darin, dass die Dichtheit der Schweißnaht am Boden kontrolliert werden muss.

Aus der DE 33 12 763 A1 ist es bekannt, dass der Zylinder zusammen mit dem Boden durch Kaltfließpressen erzeugt wird. Diese Herstellungsmethode führt zwar zu einem qualitativ hochwertigen Zylinder, doch ist die Herstellung vergleichsweise teuer.

Eine Alternative besteht darin, dass der Boden durch das Umformen des Zylinderendes hergestellt wird. So beschreibt die DE 101 63 219 A1, dass der Boden des Zylinders unmittelbar aus dem ursprünglichen Wandabschnitt des Zylinders umformtechnisch hergestellt wird. Als besonders vorteilhaft wird angesehen, wenn der Boden eine Wölbung aufweist, die beispielsweise durch nachträgliches Prägen hergestellt wird.

Die DE 44 04 349 C2 betrifft einen Schwingungsdämpfer, dessen Boden in einen Zylinder eingeschweißt ist. Der Boden verfügt über Anformungen, die als Stützflächen für ein scheibenförmiges Bodenventil dienen.

Die Aufgabe der Erfindung besteht darin, ein Herstellungsverfahren für einen Schwingungsdämpfer bereitzustellen, bei dem der äußere Zylinder zuverlässig dicht ist und andererseits ein einfacher Bodenventilkörper einsetzbar ist.

Erfindungsgemäß wird die Aufgabe dadurch gelöst, der Boden für einen Bodenventilkörper axiale Stützflächen aufweist, die durch beidseitig am Boden angreifende Umformwerkzeuge erzeugt werden.

Der Zylinder muss nach seiner Fertigstellung nicht auf Dichtheit überprüft werden. Durch die Umformschritte wird der Boden randseitig verfestigt. Der Prägearbeitsschritt erübrigt eine aufwändige spanende Bearbeitung des Zylinderbodens.

In weiterer vorteilhafter Ausgestaltung des Verfahrens werden die Umform- und Prägearbeitsschritte am temperierten Zylinder ausgeführt. Insbesondere das Prägen führt dazu, dass der Boden gas- und flüssigkeitsdicht ist. Es findet eine zusätzliche Materialverdichtung statt. Würde man das Prägen entfallen lassen, dann müsste man den Boden z. B. zuschweißen oder bei einem Schwingungsdämpfer z. B. ein Anschlussgelenkstück aufschweißen, das praktisch als Deckel für eine zentrale Fehlstelle fungieren würde.

Zusätzlich kann man vorsehen, dass der Zylinder innenseitig gebürstet wird. Mit diesem Arbeitsschritt werden eventuell noch vorhandene Bearbeitungsgrate entfernt oder auch verzunderte Oberflächen gereinigt.

Gemäß einem vorteilhaften Unteranspruch weisen die Stützflächen eine Zentrierung für den Boden innerhalb des Zylinders auf, die mittels des Prägearbeitsschrittes erzeugt werden. Auch diese Maßnahme dient der Minimierung des Bearbeitungsaufwands am fertigen Zylinder.

Des Weiteren können an der Bodenkontur in Zuströmrichtung zum Bodenventil Strömungsleitflächen mit einem sich ändernden Krümmungsradius angeprägt werden. Derartige Geometrien lassen sich spanend nur schwer erzeugen, insbesondere wenn der Boden schon mit dem Zylinder verbunden ist.

Um den Umformaufwand insgesamt gering zu halten, werden die Stützflächen und die Strömungsleitflächen jeweils an einem Prägenocken ausgeführt.

Im weiteren Herstellungsablauf wird ein Bodenventilkörper als eine ebene Scheibe hergestellt. Die Scheibe kann sintertechnisch oder als Blech-Stanz-Prägeteil hergestellt werden.

Anhand der folgenden Figurenbeschreibung soll die Erfindung näher erläutert werden.

Es zeigt:
- Fig. 1: Verfahrensschritt Anformen des Bodens
- Fig. 2: Verfahrensschritt Prägen des Bodens
- Fig. 3: Schnittdarstellung des Zylinders
- Fig. 4: Innenansicht des Zylinders auf den Boden

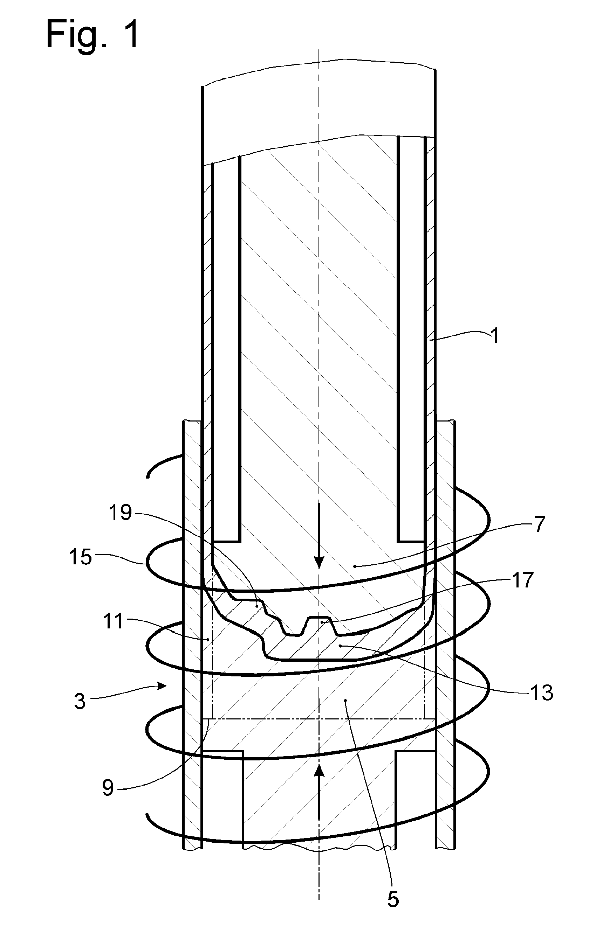

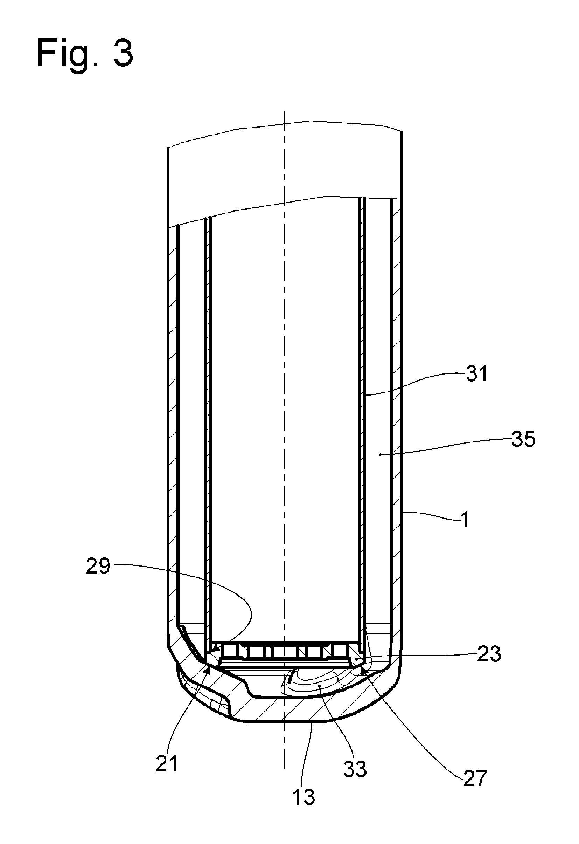

Die Fig. 1 zeigt einen äußeren Zylinder 1 eines an sich bekannten Schwingungsdämpfers in Zweirohrausführung (s. Fig. 3). Dieser Zylinder wird innerhalb eines Herstellungsverfahrens aus einem Halbzeug auf eine Länge inklusive einem Bearbeitungszuschlag gebracht. Etwaige störende stirnseitige Grate werden entfernt. Die Durchmessermaße liegen aufgrund der gewählten Halbzeugmaße fest. Der Zylinderwerkstoff ist beliebig wählbar, wobei bevorzugt Stahl oder Aluminium zur Anwendung kommen.

In einem ersten Bearbeitungsschritt wird der endseitig offene Zylinder 1 in eine Vorrichtung 3 eingeführt, die den Zylinder 1 radial zentriert und axial fixiert. Die Vorrichtung 3 umfasst ein erstes glockenförmiges Umformwerkzeug 5 und ein zweites stempelförmiges Umformwerkzeug 7. In der Ausgangssituation weist die offene Stirnfläche 9 des Zylinders 1 in Richtung des glockenförmigen Umformwerkzeugs 5 auf. Die beiden Umformwerkzeuge 5; 7 führen beidseitig zu einem aus dem Randbereich 11 des Zylinders zu formenden Boden 13 zueinander eine rein axiale Stellbewegung aus, wobei das stempelförmige Umformwerkzeug 7 auch lediglich als ortsfester Gegenhalter fungieren kann.

Bei dem Umformvorgang ist der Zylinder 1 temperiert. Man kann die Restwärme ausnutzen, die bei der Herstellung des Halbzeugs anfällt oder eine Heizvorrichtung 15 an der Vorrichtung vorsehen. Die Erwärmung des Zylinders 1 soll die Umformung erleichtern, insbesondere die gasdichte Verbindung der umgeformten Volumenteile zu einem geschlossenen Boden 13 fördern. Die beiden Umformwerkzeuge 5, 7 sind derart profiliert, dass an wichtigen Bodenbereichen ein Materialzuschlag 17; 19 vorliegt. So bildet sich in der Mitte des Bodens 13 ein Materialaufwurf 17 aus. Auch an axialen Stützflächen 21 für einen Bodenventilkörper 23 (Fig. 3), die beim Umformvorgang erzeugt werden, liegt noch ein Übermaß vor, d. h. der Boden weist eine größere Materialstärke auf, als das vorgegebene Nennmaß vorsieht.

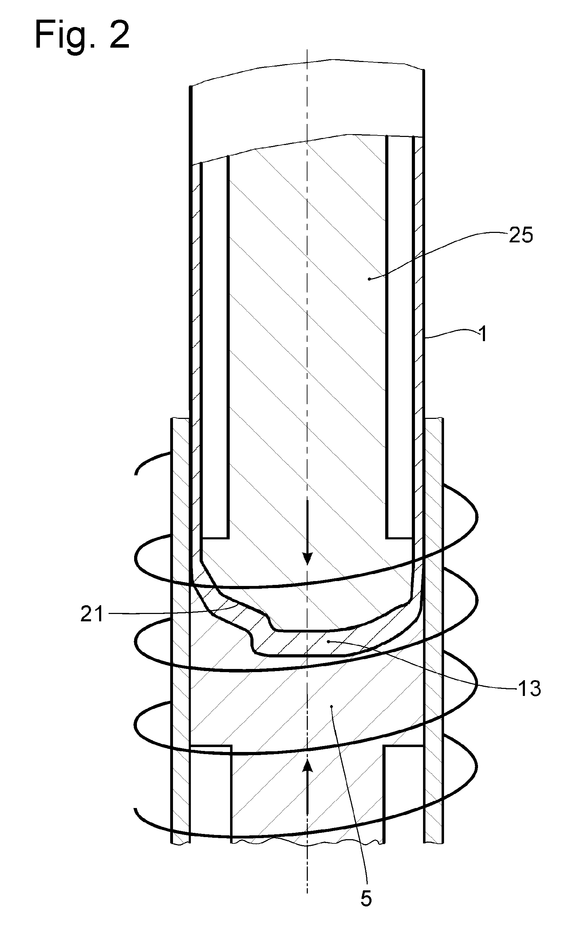

In einem zweiten Bearbeitungsschritt, vereinfacht dargestellt in der Fig. 2, wird in den Zylinder 1 ein Prägestempel 25 eingeführt, der die axialen Stützflächen 21 auf das gewünschte Nennmaß geprägt. Gleichzeitig wird der an der Bodenmitte vorhandene Materialaufwurf 17 geglättet und verdichtet, so dass der Boden 13 ohne weitere Nacharbeit gasdicht ist. Ggf. kann der Zylinder innenseitig 1 gebürstet werden, um Bearbeitungsrückstände zu entfernen.

Wie aus der Fig. 3 erkennbar ist, wird an den Stützflächen 21 auch eine Zentrierung für den Bodenventilkörper 23 angeprägt. Dazu ist die Stützfläche 21 konisch ausgeführt, wobei der Bodenventilkörper 23 eine konische Gegenfläche 27 aufweist und als eine einfache Scheibe hergestellt werden kann, die lediglich eine radiale Führung für einen Innenzylinder aufweist.

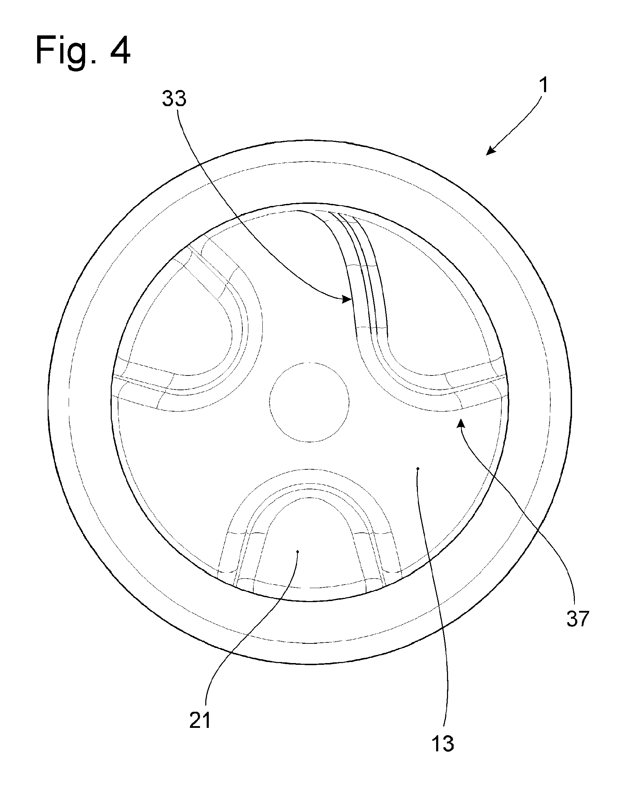

Die Fig. 4 zeigt die Innenseite des Zylinders 1 mit Blickrichtung auf den Boden 13. Es liegen drei erhabene Stützflächen 21 vor, auf denen der Bodenventilkörper 23 aufliegt. Die Stützflächen 21 sind in Umfangsrichtung gleichmäßig verteilt und erstrecken sich, wie aus der Zusammenschau mit der Fig. 3 erkennbar ist, bis zum Außendurchmesser des Zylinders 1.

Beispielhaft ist ein einer Stützfläche 21 eine Strömungsleitfläche 33 angeformt, die abgewinkelt zur Stützfläche 21 verläuft, wie die Fig. 3 zeigt. Strömungsleitfläche 33 weist einen in Umfangsrichtung sich ändernden Krümmungsradius auf, der während des Schwingungsdämpferbetriebs in einem im Ausgleichsraum 35 befindlichen Dämpfmittel bei der Rückströmung in den Innenzylinder einen Drall erzeugt und damit der Geräuschentwicklung im Schwingungsdämpfer entgegenwirkt.

Die Strömungsleitflächen 33 und die Stützflächen 21 sind jeweils paarweise an einem Prägenocken 37 ausgeführt, so dass zwischen den einzelnen Stützflächen 21 bzw. Prägenocken 37 noch ein ausreichend großer Querschnitt für eine möglichst ungedrosselte Strömung zur Verfügung steht.

## Patentansprüche

1. Verfahren zur Herstellung eines äußeren Zylinders (1) für einen Schwingungsdämpfer, wobei der Zylinder (1) endseitig von einem Boden (13) verschlossen, der durch eine axiale rotationsfreie Stauchbewegung eines Umformwerkzeugs (5; 7) aus einem Randbereich (11) des Zylinders (1) erzeugt wird, wobei die Bodenkontur mittels eines Prägearbeitsschritts kalibriert wird und auf dem Boden ein Bodenventilkörper (23) montiert wird,
**dadurch gekennzeichnet,**
**dass** der Boden (13) für den Bodenventilkörper (23) axiale Stützflächen (21) aufweist, die durch beidseitig am Boden (13) angreifende Umformwerkzeuge (5; 7) erzeugt werden.

2. Verfahren nach Anspruch 1,
**dadurch gekennzeichnet,**
**dass** die Umform- und Prägearbeitsschritte am temperierten Zylinder (1) ausgeführt werden.

3. Verfahren nach Anspruch 1,
**dadurch gekennzeichnet,**
**dass** der Zylinder (1) innenseitig gebürstet wird.

4. Verfahren nach Anspruch 1,
**dadurch gekennzeichnet,**
**dass** die Stützflächen (21) eine Zentrierung für den Bodenventilkörper (23) innerhalb des Zylinders (1) aufweisen, die mittels des Prägearbeitsschrittes erzeugt werden.

5. Verfahren nach Anspruch 1,
**dadurch gekennzeichnet,**
**dass** an der Bodenkontur in Zuströmrichtung zum Bodenventilkörper (23) Strömungsleitflächen (33) mit einem sich ändernden Krümmungsradius angeprägt werden.

6. Verfahren nach Anspruch 5,
**dadurch gekennzeichnet,**
**dass** die Stützflächen (21) und die Strömungsleitflächen (33) an einem Prägenocken (37) ausgeführt werden.

7. Verfahren nach Anspruch 1,
**dadurch gekennzeichnet,**
**dass** ein Bodenventilkörper (23) als eine ebene Scheibe hergestellt wird.
